# EUROPÄISCHE PATENTSCHRIFT

(11) **EP 0 913 979 B1**
(45) Veröffentlichungstag und Bekanntmachung des Hinweises auf die Patenterteilung: **05.08.2009**
(21) Anmeldenummer: 98120530.5
(22) Anmeldetag: 30.10.1998
(51) Int. Cl.: H04M 1/725

(54) **Verfahren zum Betrieb eines Mobiltelefons und Mobiltelefon**
Mobile telephone and method for operating the same
Téléphone mobile et méthode d'exploitation de celui ci

(30) Priorität: 30.10.1997 DE 19748054
(43) Veröffentlichungstag der Anmeldung: 06.05.1999
(73) Patentinhaber: IPCom GmbH & Co. KG, 82049 Pullach (DE)
(72) Erfinder: Weiss, Karl-Ernst, 76275 Ettlingen (DE)
(74) Vertreter: Gigerich, Jan

(56) Entgegenhaltungen:
- EP-A- 0 665 655
- WO-A-92/20167
- WO-A-94/01963
- DE-U- 29 617 734

## Beschreibung

### Stand der Technik

Die vorliegende Erfindung bezieht sich auf ein Verfahren zum Betrieb eines Mobiltelefons für ein Mobilfunknetz, wobei das Mobiltelefon eine Mobilfunknetzkarte, eine Sende-/und Empfangseinrichtung für Mobilfunk-Signale, eine Tastatur und ein Display aufweist. Die vorliegende Erfindung bezieht sich ferner auf ein derartiges Mobiltelefon für ein Mobilfunknetz.

Übliche Fernbedienungen z. Bsp für die Zentralverriegelung eines Kraftfahrzeugs, die Garagentorsteuerung usw. besitzen aus Gründen des Platzbedarfs und der Handlichkeit im allgemeinen nur wenige Tasten und kein Display. Die bekannten z. Bsp. in Zündschlüssel integrierten Handsender besitzen meist nur zwei Tasten. Sie können daher nur eine eingeschränkte Anzahl von Funktionen zur Verfügung stellen. Eine Anzeige für z. Bsp. ihren Batteriezustand ist nur selten vorhanden. Ferner wird im allgemeinen für jedes einzelne fernbediente Objekt eine eigene Fernsteuerung benötigt, was lästig und umständlich ist.

Die in solchen Fernbedienungen verwendeten Codes zur Identifizierung und Auslösung von Funktionen sind häufig leicht zu entschlüsseln, was einen Mißbrauch erleichtert.

Die WO 92/20167 beschreibt eine persönliche Kommunikationseinrichtung mit einem Drahtlos-Transceiver, um einen Austausch von Benutzerinformation in zwei Richtungen und das Herunterladen von Steuerinformation für eine Fernsteuerfunktion zu ermöglichen.

Die DE 29617734 U1 beschreibt ein Mobiltelefon, welches einen Infrarotsender aufweist, der durch die in dem Mobiltelefon vorhandenen Bedientasten steuerbar ist. Das Mobiltelefon weist eine Steuerschaltung auf, welche nach Umschalten der Betriebsart des Mobiltelefons vom Telefonbetrieb auf den lnfrarotsendebetrieb das Betätigen der Bedientasten in eine vom Infrarotsender zu übertragende Information wandelt.

Die WO 94/01963 beschreibt ein Zugangskontrollsystem, wobei der Benutzer sich mittels seines Mobiltelefons und eines in dieses eingegebenen ldentifizierungscodes identifiziert.

### Vorteile der Erfindung

Die Erfindung schlägt ein Verfahren zum Betrieb eines Mobiltelefons gemäß Anspruch 1 und ein Mobiltelefon gemäß Anspruch 21 vor.

Das erfindungsgemäße Verfahren, bei dem ein Mobiltelefon als Fernsteuerung betrieben wird, wobei mittels eines Senders Daten an einen Empfänger übertragen werden und das Mobiltelefon in einen Betriebszustand geschaltet wird, in welchem keine Verbindung zu einem Mobilfunknetz hergestellt wird, hat demgegenüber den Vorteil, daß nur noch ein einziges Gerät benötigt wird, um eine ganze Anzahl von Funktionen zu bedienen. Dieses erfindungsgemäße Mobiltelefon bietet eine umfangreiche Tastatur und daher eine große Anzahl von unterschiedlichen Service- und Bedienfunktionen.

Ferner haben das erfindungsgemäße Verfahren und das erfindungsgemäße Mobiltelefon den weiteren Vorteil, daß die Fernsteuerung mit erhöhter Identifikationssicherheit und geringem Aufwand für vielfältige Anwendungen möglich ist.

Erfindungsgemäß ist ferner vorgesehen, daß im Mobiltelefon ein zusätzlicher Betriebszustand für die Funktion als Fernsteuerung geschaltet werden kann, in dem keine Telefonverbindung zu einer Basisstation, z. Bsp. des D1-, D2-, E-plus-Netzes usw. aufgebaut wird. Dies ist deswegen nötig, weil übliche, von Mobiltelefonen ausgehende Verbindungen Gebühren verursachen. Auf diese Weise wird die Entstehung von Gebühren vermieden.

Durch die in den Unteransprüchen genannten Maßnahmen sind vorteilhafte Weiterbildungen und Verbesserungen des erfindungsgemäßen Verfahrens bzw. des erfindungsgemäßen Mobiltelefons möglich. Dabei sind die Begriffe "Sender" bzw. "Empfänger" so zu verstehen, daß die damit bezeichneten Teile, Einrichtungen usw. alle für eine anwendungsgerechte Übertragung von Daten, Befehlen und sonstigen Nachrichten notwendigen Bestandteile, etwa Sendeeinheit, Endstufen, Antennen etc. enthalten, auch wenn dies im Text nicht näher beschrieben wird. Der Ausdruck "Objekt" steht stellvertretend für Einrichtungen, die mittels einer Fernbedienung gesteuert werden können, insbesondere Garagentore, Haustüren, Beleuchtungseinrichtungen, Zentralverriegelungen für Kraftfahrzeugen und so weiter.

Eine vorteilhafte Ausgestaltung der Erfindung sieht vor, daß das Mobiltelefon mit einem zusätzlichen Sender für die Fernbedienung ausgerüstet ist. Gegebenenfalls kann noch eine entsprechende Empfangseinrichtung zur Entgegennahme von Bestätigungsmeldungen etwa des fernbedienten Objekts vorgesehen sein. Die Übertragung der fernbedienungsspezifischen Nachrichten, z. Bsp. Befehle, Identifikationscodes usw. erfolgt vorzugsweise drahtlos auf dafür freigegebenen Frequenzen, z. Bsp. im LF- oder HF-Bereich, im UHF-Bereich, über Ultraschall oder Infrarot (IR), unabhängig von der Übertragungsrichtung.

Die Erfindung sieht ausserdem vor, daß der zusätzliche fernbedienungsspezifische Sender des Mobiltelefons die Teilnehmer-Daten der Mobilfunknetzkarte und den Funktionscode für die Ausführung der durch die Fernsteuerung auszulösenden Funktion vorzugsweise verschlüsselt zu einem Empfänger überträgt, der z. Bsp. in einem Fahrzeug, einer Haustür, einem Garagentor etc. vorgesehen ist. Der dort installierte Empfänger nimmt auch die Auswertung, Identifikation bzw. Verifikation und die Umsetzung des übertragenen Codes in eine Wirkung vor. Vorteilhafterweise ist vorgesehen, daß das Fahrzeug, das Garagentor usw. ebenfalls einen Sender besitzt, der eine Vollzugs- oder Fehlermeldung zurücksenden kann. Auf dem Display des Mobiltelefons erscheint dann eine entsprechende Anzeige, sofern es wie oben beschrieben einen dafür geeigneten Empfänger besitzt.

Besonders vorteilhaft ist es, ein Sendeprotokoll, wie z. Bsp. das GSM-Protokoll in Verbindung mit einer Datenübertragung mittels IR, LF, HF, UHF usw. für die Fernsteuerung zu verwenden. Dies ist deswegen besonders vorteilhaft, da das GSM-Protokoll sehr sicher gegen Abhören ist. Es ist auch die Verwendung des auf der Mobilfunknetzkarte vorhandenen Teilnehmercodes als Berechtigungsnachweis gegenüber dem fernbedienten Objekt möglich. Ferner gestattet es die Verwendung des Teilnehmercodes der Mobilfunknetzkarte, Zugriffsrechte abhängig von diesem Teilnehmercode zu gewähren oder zu verweigern, z. Bsp. durch geeignete, aber hier nicht näher beschriebene Verknüpfung mit einem aufgerufenen Funktionscode. Dadurch wird z. Bsp. die Ausführung einer Fernbedienungsfunktion auch dann verhindert, wenn ein für die Ausführung einer Fernbedienungsfunktion spezifischer Code, z. Bsp. ein PIN-Code, einer anderen Person als dem Berechtigten bekannt ist, diese unberechtigte Person aber nicht die Mobilfunknetzkarte der berechtigten Person besitzt.

Eine Alternative dazu sieht vor, daß ein den Sicherheitsanforderungen beispielsweise an die Zugangsberechtigung entsprechendes Identifikationsverfahren mit den im Mobiltelefon bereits vorhandenen Einrichtungen möglich ist und benutzt werden muß. Ein geeignetes Beispiel dafür sind persönliche Codes, die über die Tasten des Mobiltelefons eingegeben werden können (PIN-Codes) oder eine Sprecherverifikation anhand der Sprachübertragung mit den für den normalen Telefonbetrieb vorgesehenen Einrichtungen des Mobiltelefons und/oder z. Bsp. die Verwendung von Kennworten und/oder Verwertung sprecherspezifischer Kenndaten o. ä. auch zusätzlich zur Auswertung des Teilnehmercodes der Mobilfunk-Netzkarte.

Das zusätzliche, fernbedienungsspezifische Sender- bzw. Sender-/Empfängerelement kann in einer weiteren vorteilhaften Ausgestaltung der vorliegenden Erfindung als externes Modul ausgestaltet sein. Ein solches Modul kann z. Bsp. auf das Mobiltelefon aufgesteckt werden. Die Verbindung vom Modul zum Mobiltelefon kann z. Bsp. über eine bereits vorhandene Daten-Schnittstelle des Mobiltelefons hergestellt werden. Der besondere Vorteil dieser Ausgestaltung liegt darin, daß ein oder mehrere bereits in Benutzung befindliche und dafür eingerichtete Mobiltelefone bei Bedarf problemlos nachrüstbar sind. Bei entsprechender Vereinheitlichung der Daten-Schnittstellen, der Protokolle und der Bediensoftware verschiedener Typen von Mobiltelefonen ist die Ausgestaltung und Verwendung einer Fernbedienung in Form eines solchen externen Moduls auch nicht an einen bestimmten Typ gebunden.

Eine andere Ausführung sieht vor, diesen zusätzlichen, fernbedienungsspezifischen Sender im Gehäuse eines Akkus des Mobiltelefons unterzubringen. Ein derartiger Akku kann auch als Sonderzubehör lieferbar sein. Dadurch ist auch die Stromversorgung des fernbedienungsspezifischen Senders in einfacher Weise erreichbar.

Besonders vorteilhaft ist eine Formgebung des Gehäuses des z. Bsp. als Sonderzubehör lieferbaren Akkus, bei der sowohl der Stromversorgungs-Anschluß des Mobiltelefons als auch der Anschluß des fernbedienungsspezifischen Sender- bzw. Sender/Empfängerelements an die für die Fernbedienungszwecke verwendete bzw. verwendbare Datenschnittstelle des Mobiltelefons ohne zusätzliche Steckverbindungen in einem Bedienvorgang erfolgt. Geeignet ist z. Bsp. eine Ausgestaltung des Gehäuses in L-Form.

Eine weitere vorteilhafte Ausgestaltung des erfindungsgemäßen Verfahrens besteht darin, daß die für die Kommunikation in einem Mobilfunknetz ursprünglich vorhandene Sende-/Empfangseinheit im Mobiltelefon als Sender- bzw. Sender-/Empfängerelement für eine Fernbedienung benutzt wird. Das Mobiltelefon kann hierzu in einen bestimmten Betriebszustand gebracht werden, in dem es keine Verbindung zu einem Mobilfunknetz aufnimmt. In diesem Betriebszustand kann das Mobiltelefon lediglich Nachrichten für Fernbedienungszwecke senden und ggf. empfangen. In diesem speziellen Betriebszustand kann zusätzlich auch die Sendeleistung derart verringert werden, daß einerseits eine brauchbare Reichweite für Fernbedienungszwecke, z. Bsp. 10 m, erreicht wird, andererseits aber keine Störungen des Mobilfunknetzes oder seiner Teilnehmer auftreten können. In diesem Betriebszustand ohne Verbindung zu einem solchen Mobilfunknetz kann ggf. auch eine bereits vorhandene Mobilfunk-Fahrzeugantenne benutzt werden, wodurch eine Fernbedienung von Objekten auch dann möglich ist, wenn das Mobiltelefon z. Bsp. noch im Fahrzeug angebracht ist, sei es fest oder herausnehmbar installiert.

Die Vorteile dieser Ausgestaltung liegen darin, daß man die sehr sicher verschlüsselten mobilfunkspezifischen Übertragungsverfahren, z. Bsp. die des GSM-Standards, benutzen kann und keine besonderen, fernsteuerungsspezifischen Sender- bzw. Sender/Empfängerelemente im Mobiltelefon nötig sind. Bei einem bspw. in einem Fahrzeug, einer Haustür oder einem Garagentor vorgesehenen, geeignet ausgeführten und mit hinreichender Sendeleistung ausgestatteten Sender ist die Rückmeldung der Ausführung oder Nichtausführung des Fernsteuerbefehls und deren Darstellung auf dem bereits vorhandenen Display des Mobiltelefons möglich.

Diese Option kann in besonders vorteilhafter Weise unter Verwendung der bereits im Mobiltelefon für den Betrieb in einem Mobilfunknetz vorhandenen Sende-/Empfangseinheit und ggf. auch der damit verbundenen externen Teile, etwa einer Fahrzeug-Mobilfunkantenne, dadurch realisiert werden, daß im fernbedienungsspezifischen Betriebszustand auf eine andere, nur hierfür verwendete Frequenz umgeschaltet wird. Diese Frequenz kann von den für Mobilfunkbetrieb ausgelegten vorhandenen Einrichtungen des Mobiltelefons nur für das Senden bzw. Senden und Empfangen fernbedienungsspezifischer Nachrichten benutzt werden, ohne das Mobilfunknetz und dessen Teilnehmer zu stören. Dieser Frequenzwechsel kann auch mit einer Absenkung der Sendeleistung des Mobiltelefons verbunden sein.

Eine weitere vorteilhafte Ausgestaltung der vorliegenden Erfindung sieht vor, daß das Mobiltelefon als Umsetzer betrieben wird. Dabei wird z. Bsp. über das Mobilfunknetz eine Leitzentrale angerufen. Der Anrufende weist sich bei Bedarf zusätzlich auch der Leitzentrale gegenüber gesondert aus, etwa durch ein besonderes Kennwort, einen Tastencode, einen Zahlencode o. dgl. mehr. Die Leitzentrale prüft dies und sendet dann z. Bsp. ebenfalls über das Mobilfunknetz ein spezifisches Signal aus, das vom Mobiltelefon in ein Freigabesignal umgesetzt wird. Dieses Freigabesignal wird dann vom zusätzlichen Sender im Mobiltelefon oder von der auch als Fernbedienung betriebenen original vorhandenen Sendeeinheit des Mobiltelefons zur zu öffnenden Tür, zum Garagentor, zur Zentralverriegelung usw. gesendet. Der besondere Vorteil dieser Ausgestaltung liegt darin, daß durch die besondere Ausweispflicht gegenüber der Leitzentrale die Sicherheit erheblich erhöht wird. Bei diesem Ausführungsbeispiel ist die Teilnehmeridentifizierung durch Auswertung gesprochener Daten (Kennwort etc.) und Analyse der sprecherspezifischen Kennwerte, d. h. Sprechererkennung/-verifikation, besonders vorteilhaft.

Es ist dabei nicht zwingend notwendig, daß die Anforderung zur Freigabe einer Fernbedienungsfunktion bei der Leitzentrale und die Umsetzung des Freigabesignals in ein Fernbedienungssignal über das gleiche Mobiltelefon erfolgen. In diesem Fall kann die Sicherheit noch dadurch erhöht werden, daß nicht nur der Teilnehmercode der Person, welche die Freigabe anfordert, sondern auch der Teilnehmercode der im als Umsetzer fungierenden Mobiltelefon enthaltenen Netz-(SIM)-Karte zur Ausführung des Fernbedienbefehls zugelassen sein muß. Eine weitere Kontrollmöglichkeit für die Authentizität einer Freigabeanforderung ist z. Bsp. durch die zellulare Struktur eines üblichen Mobilfunknetzes gegeben, da hier der jeweilige Aufenthaltsort eines Mobiltelefons für den Netzbetreiber bekannt und nachprüfbar ist.

Das erfindungsgemäße Verfahren bzw. das erfindungsgemäße Mobiltelefon erlaubt also die Mehrfachnutzung von in Mobiltelefonen bereits vorhandenen Komponenten, wie z. Bsp. Tasten, Display, Mobilfunknetzkarte, Sende- und Empfangseinrichtungen usw.

Ferner wird die Zuverlässigkeit der Identifikation durch eine abhör- und entschlüsselungssichere, z. Bsp. GSM-typische Übertragung eines Codes, etwa des auf der Mobilfunknetzkarte gespeicherten Teilnehmercodes, ermöglicht. Dadurch ist z. Bsp. ein bei üblichen Wechselcodes mögliches Auseinanderlaufen der Codes von Fahrzeug- und Fernsteuersender nicht möglich. Für die Fernbedienung auch verschiedener fernbedienbarer Objekte sind keine jeweils gesonderten Handsender notwendig. Die große Anzahl von Tasten auf Mobiltelefonen erlaubt eine große Funktionsvielfalt auch für die Fernsteuerungs-Funktion.

Das erfindungsgemäße Verfahren bzw. das erfindungsgemäße Mobiltelefon sind für alle Arten von Fernsteuerungen geeignet, z. Bsp. für Schließsysteme, Türen und Tore aller Art, Beleuchtungseinrichtungen etwa in Haus und Garten und besonders für Funktionen eines Kraftfahrzeugs, insbesondere die Zentralverriegelung und/oder die Wegfahrsperre. Vor allem die Freigabe von Einrichtungen über eine Leitzentrale mit besonderer Ausweispflicht des die Freigabe Anfordernden bietet sich für Hochsicherheitsanwendungen (z. Bsp. Werttransporte) an.

### Zeichnung

Im folgenden wird die Erfindung anhand eines Ausführungsbeispiels mit Bezug auf die Zeichnung näher erläutert. Es zeigen
- Figur 1: eine schematische Darstellung verschiedener Komponenten der vorliegenden Erfindung;
- Figur 2: eine schematische Darstellung einer Ausführungsform eines erfindungsgemäßen Mobiltelefons mit einem als externes Modul aufgesteckten fernbedienungsspezifischen Sender- bzw. Sender-/Empfängerelement.

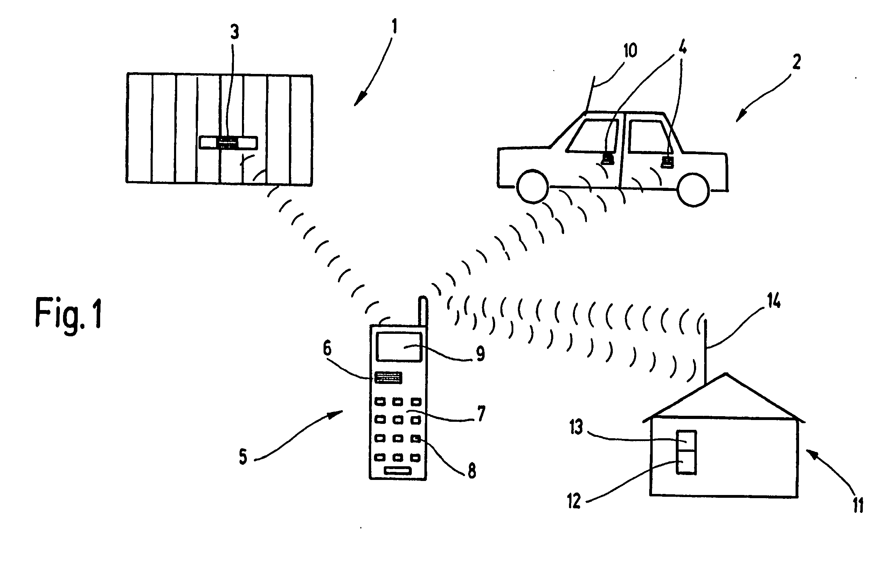

Figur 1 zeigt schematisch verschiedene Komponenten zur Durchführung des erfindungsgemäßen Verfahrens, nämlich ein Mobiltelefon 5, ein Kraftfahrzeug 2 mit z. Bsp. fernsteuerbarer Zentralverriegelung und Mobilfunkantenne 10 und ein per Fernsteuerung bedienbares Garagentor 1 sowie eine bei Bedarf in das Fernbedienungssystem einbezogene Leitzentrale 11 mit entsprechenden Sende-/Empfangseinrichtungen 13 und Identifizierungsvorrichtungen 12 sowie zugehöriger Antenne 14. Die am Fahrzeug vorhandene Mobilfunkantenne 10 kann je nach Auslegung des Fernbedienungssystems auch für Fernbedienungszwecke benutzt werden.

Ein Garagentor 1 und ein Kraftfahrzeug 2 sind jeweils mit einem Empfänger- bzw. Sender-/Empfängerelement 3, 4 ausgestattet. Die Empfänger- oder Sender-/Empfängerelemente 3, 4 sind in der Lage, bspw. LF-, HF-, UHF-, Ultraschall- oder IR-Signale zu empfangen oder/und zu senden. Als Fernsteuerung für das Garagentor 1 und das Kraftfahrzeug 2 dient ein Mobiltelefon 5. Das Mobiltelefon 5 ist mit einer SIM-Karte ausgerüstet, die z. Bsp. in Deutschland mit dem GSM-Standard kompatibel ist und den Zugang zu einem Mobilfunknetz ermöglicht, wie die Netze D1, D2, E-plus usw. Das Mobiltelefon 5 weist ferner ein zusätzliches Modul in Form eines Sender- bzw. Sender-/Empfängerelements 6 auf. Das Mobiltelefon 5 weist ferner einen besonderen Betriebsmodus auf, der z. Bsp. mit einer Funktionstaste 8 der Tastatur 7 angewählt werden kann. In diesem Betriebsmodus wird mit der Tastatur 7 des Mobiltelefons 5 lediglich das Sender- bzw. Sender-/Empfängerelement 6 bedient. Die Sende- und Empfangseinheit für Mobilfunkdaten, die zur Herstellung einer Telefonverbindung dient, ist in diesem Ausführungsbeispiel stillgelegt.

Das Mobiltelefon 5 wird wie folgt bedient. Durch Drücken einer Funktionstaste 8 wird der Betriebsmodus angewählt, bei dem lediglich das Sender- oder Sender-/Empfängerelement 6 mit der Tastatur 7 bedient werden kann. Bei Verfahren zur Sprecheridentifikation kann das Sender- oder Sender-/Empfängerelement 6 über das Mikrofon die Sprache des Teilnehmers übertragen. Zur Bedienung z. Bsp. der Zentralverriegelung des Kraftfahrzeugs 2 wird mittels eines Tastendrucks ein Signal zum Empfänger- oder Sender-/Empfängerelement 4 des Kraftfahrzeugs 2 übermittelt. Der im Mobiltelefon 5 vorgesehene Sender des Sender-/Empfängerelements 6 überträgt z. Bsp. unter Verwendung des GSM-Protokolls den auf der SIM-Karte des Mobiltelefons 5 vorhandenen Teilnehmercode sowie bei Bedarf weitere zur Fernbedienung erforderliche Teilnehmerdaten, die auf der SIM-Karte gespeichert sind und/oder einen mit der Tastatur 7 vorgebbaren Funktionscode zum Empfänger bzw. zum Sender-/Empfängerelement 4 des Kraftfahrzeugs 2. Je nach Sicherheitsanforderung können Funktions- und Teilnehmerdaten einzeln oder logisch miteinander verknüpft bzw. verschlüsselt übertragen werden. Auf dem Display 9 des Mobiltelefons 5 werden der jeweilige Status der Fernbedienung und/oder Hinweise auf weitere Bedienschritte sowie bei Vorhandensein einer Rückmeldeeinrichtung am fernbedienten Objekt, hier das Kraftfahrzeug 2, eine Vollzugs- oder Fehlermeldung angezeigt.

Die gleichen Vorgänge laufen sinngemäß auch bei der Fernbedienung des Garagentors 1 mit dem zugehörigen Empfänger- bzw. Sender-/Empfängerelement 3 ab.

Der Empfänger der Sender-/Empfängereinheit 3 eines angesteuerten Objekts 1, 2 wertet die übermittelten Daten aus, überprüft die Berechtigung und nimmt die Funktionsumsetzung vor. Beispielsweise wird das Garagentor 1 geschlossen oder das Kraftfahrzeug 2 verriegelt. Anschließend strahlt der Sender in der ggf. vorhandenen Sender-/Empfängereinheit 3, 4 des Garagentors 1 oder des Kraftfahrzeugs 2 ein Antwortsignal aus, das vom Empfänger des Sender-/Empfängerelements 6 im Mobiltelefon 5 entgegengenommen wird. Auf dem Display 9 des Mobiltelefons 5 erscheint z. Bsp. eine Bestätigungsmeldung.

Selbstverständlich ist statt der HF- oder IR-Signalübertragung eine Signalübertragung mittels anderer drahtloser Verfahren ebenso möglich.

Eine Alternative besteht darin, daß die Empfänger- bzw. Sender-/Empfängereinheiten 3,4 der Garage 1 bzw. des Kraftfahrzeugs 2 direkt und ausschließlich die Funksignale empfangen können, die von der normalerweise für den Betrieb im Mobilfunknetz vorgesehenen Sende- und Empfangseinheit des Mobiltelefons 5 ausgehen. Allerdings wird mit einer Funktionstaste 8 der Tastatur 7 dann vorher ein Betriebsmodus gewählt, bei dem die Sendeleistung der Sende- und Empfangseinheit des Mobiltelefons 5 derart herabgesetzt ist, daß keine Verbindung zu einem Mobilfunknetz aufgenommen wird. Stattdessen sind lediglich die Sender-/Empfängerelemente 3, 4 in der Lage, die vom Mobiltelefon 5 ausgehenden Signale - und nur diese - zu empfangen.

Eine weitere Möglichkeit besteht darin, daß die Leistung der Sende- und Empfangseinheit nicht herabgesetzt wird, sondern mit einer Funktionstaste 8 der Tastatur 7 ein Betriebszustand gewählt wird, bei dem eine vom Mobilfunknetzbetreiber zur Verfügung gestellte, vorzugsweise kostenlose Datenübertragung möglich ist.

Eine weitere Ausgestaltung sieht vor, daß das Mobiltelefon 5 mittels der Funktionstaste 8 in einen fernbedienungsspezifischen Betriebszustand gebracht werden kann, in dem unter Verwendung der für den normalen Mobilfunkverkehr vorhandenen Sende- und Empfangseinheit keine Verbindung zu einem Mobilfunknetz aufgenommen wird. Vorteilhafterweise wird dabei zur Vermeidung von Störungen des Mobilfunknetzes ebenfalls die Sendeleistung reduziert. Die Benutzung einer eventuell am Kraftfahrzeug 2 vorhandenen Mobilfunkantenne 10 gestattet auch die Fernbedienungsfunktion bei im Kraftfahrzeug 2 fest oder herausnehmbar angebrachtem Mobiltelefon 5.

Eine Realisationsmöglichkeit dieser Verfahrensvariante besteht in einem Frequenzwechsel. Dabei wird das Mobiltelefon 5 in einen fernbedienungsspezifischen Betriebszustand gebracht, in welchem auf eine, vorteilhafterweise für Fernbedienungszwecke freigegebene, Frequenz gewechselt wird. Auf dieser Frequenz können fernbedienungsspezifische Nachrichten mit der im Mobiltelefon 5 bereits für den Mobilfunk vorhandenen Sende-/Empfangseinheit übertragen werden.

Ein weiteres, in Figur 1 schematisch dargestelltes Ausführungsbeispiel sieht vor, daß für höhere Sicherheitsansprüche das Mobiltelefon 5 als Umsetzer für von einer Leitstelle 11 über deren Sende-/Empfangseinrichtung 13 und der zugehörigen Antenne 14 ausgesandte Fernbedienungsbefehle arbeitet. Nach Aufforderung zur z. Bsp. Freigabe des Zugangs zu einer Garage mit dem Garagentor 1 wird in der dafür in der Leitzentrale 11 vorhandenen Einrichtung 12 die Berechtigung des Anfordernden geprüft. Bei Vorliegen einer Berechtigung wird ein entsprechendes Signal über die Sende-/Empfangseinrichtung 13 und die zugehörige Antenne 14 der Leitzentrale 11 an das Mobiltelefon 5 gesendet. Das Mobiltelefon 5 setzt dieses Signal in einen entsprechenden Fernbedienungsbefehl um und übermittelt diesen über seine Sende-/Empfangseinrichtung an das Empfänger- bzw. Sender-/Empfängerelement 3 des Garagentors 1. Besitzt das Garagentor 1 nicht nur einen fernbedienungsspezifischen Empfänger, sondern ein kombiniertes Sender-/Empfängerelement 3, kann dieses eine Vollzugs- oder Fehlermeldung an die Sende-/Empfangseinrichtung des Mobiltelefons 5 schicken; dieses wiederum kann diese Meldung an die Leitzentrale 11 weiterleiten.

Die gleichen Vorgänge laufen sinngemäß bei entsprechender Ausstattung auch bei der Fernbedienung des Kraftfahrzeugs 2 durch die Leitzentrale 11 ab.

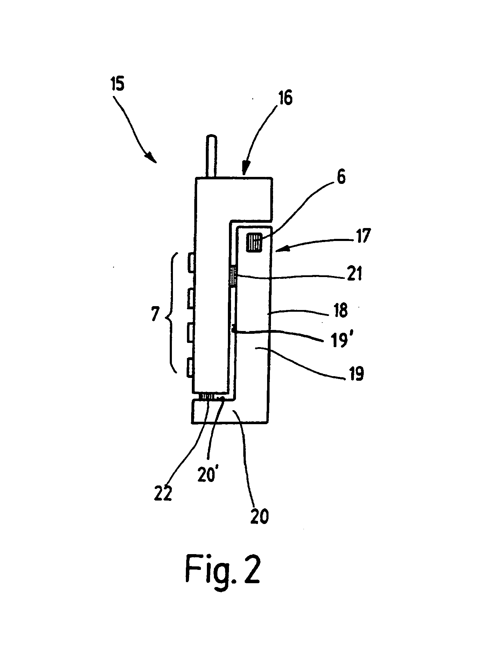

Figur 2 zeigt als mögliches Ausführungsbeispiel schematisch eine Einheit 15 aus einem erfindungsgemäßen Mobiltelefon 16 mit einem als externes Modul aufsteckbaren und abnehmbaren Akku 17. Der Akku 17 ist ein Mobilfunk-Akku und in einem Gehäuse 18 untergebracht, welches in etwa L-förmig mit einer langen Seite 19 und einer kurzen, unteren Seite 20 gestaltet ist. In diesem Gehäuse 18 befinden sich auch ein fernsteuerungsspezifisches Sender- bzw. Sender-/Empfängerelement 6. Ferner sind in dem Gehäuse 18 alle zum Anschluß des Mobiltelefons 16 an den Akku 17 erforderlichen und üblichen, hier nicht näher beschriebenen Vorrichtungen untergebracht. Dazu sind auf der langen Seite 19 des "L" an der Innenseite 19' mobiltelefonspezifische Stromversorgungsanschlüsse 21 angeordnet. Das Gehäuse 18 beherbergt ferner die zum Anschluß der Datenschnittstelle des Mobiltelefons 16 benötigten und üblichen Einrichtungen. Dazu gehören die hier auf der kurzen Seite 20 des "L" ebenfalls an der Innenseite 20' angeordneten Datenübertragungskontakte 22. Der Akku 17 kann durch Einschieben des L-förmigen Gehäuses 18 in die Aufnahmevorrichtung des Mobiltelefons 15 mit diesem elektrisch und mechanisch gekoppelt werden. Durch das Einschieben des Akkus 17 in die am Mobiltelefon 16 vorgesehene Aufnahmevorrichtung werden alle soeben erwähnten Verbindungen in elektrisch zulässiger Weise einfach hergestellt.

## Patentansprüche

1. Verfahren zum Betrieb eines Mobiltelefons (5, 16) für ein Mobilfunknetz, wobei das Mobiltelefon (5, 16) eine Mobilfunknetzkarte, eine Sende- und Empfangseinrichtung für Mobilfunk-Signale, eine Tastatur (7) und ein Display (9) aufweist,
wobei das Mobiltelefon (5, 16) mittels eines zusätzlichen fernbedienungsspezifischen Senders (6) als Fernsteuerung betrieben wird, wobei mittels des Senders (6) Daten an einen Empfänger (3, 4) eines fernbedienbaren Objekts (1, 2) übertragen werden und das Mobiltelefon (5, 16) in einen fernbedienungspezifischen Betriebszustand geschaltet wird, in welchem keine Verbindung zu einer Station des Mobilfunknetzes hergestellt wird,
**dadurch gekennzeichnet, dass** in dem fernbedienungsspezifischen Betriebszustand als Daten neben einem Funktionscode für die über die Fernbedienung auszuführende Funktion die Teilnehmerdaten der Mobilfunknetzkarte an den Empfänger (3, 4) übertragen werden.

2. Verfahren nach Anspruch 1, **dadurch gekennzeichnet, daß** das Mobiltelefon (5, 16) in einen Betriebszustand geschaltet wird, bei dem die Sende- und Empfangseinrichtung für Mobilfunk-Signale außer Betrieb genommen wird.

3. Verfahren nach Anspruch 1 oder 2, **dadurch gekennzeichnet, daß** als zusätzlicher fernbedienungsspezifischer Sender ein LF-, HF-, UHF-, Ultraschall- oder IR-Sender verwendet wird.

4. Verfahren nach einem der Ansprüche 1 bis 3, **dadurch gekennzeichnet, daß** der zusätzliche fernbedienungsspezifische Sender als externes Modul an das Mobiltelefon (5, 16) angeschlossen und über eine Datenschnittstelle des Mobiltelefons (5, 16) mit diesem verbunden wird.

5. Verfahren nach Anspruch 4, **dadurch gekennzeichnet, daß** der zusätzliche fernbedienungsspezifische Sender im Akku des Mobiltelefons (5, 16) untergebracht wird.

6. Verfahren nach einem der Ansprüche 1 bis 5, **dadurch gekennzeichnet, daß** ein Sendeprotokoll in Verbindung mit einer Datenübertragung für die Fernsteuerung verwendet wird.

7. verfahren nach einem der Ansprüche 1 bis 6, **dadurch gekennzeichnet, daß** ein auf der Mobilfunknetzkarte gespeicherter Teilnehmercode als Berechtigung für das Auslösen einer Fernbedienungsfunktion übertragen wird.

8. Verfahren nach einem der Ansprüche 1 oder 7, **dadurch gekennzeichnet, daß** die Teilnehmerdaten und/oder der Teilnehmercode derart mit dem Funktionscode verknüpft werden, daß die Fernbedienungsfunktion nur in Verbindung mit der Mobilfunknetzkarte ausgelöst werden kann.

9. Verfahren nach einem der vorhergehenden Ansprüche, **dadurch gekennzeichnet, daß** vor der Übertragung der Daten eine den individuellen Anforderungen entsprechende Identifizierung vorgenommen wird, insbesondere ein teilnehmerspezifischer Code über die Tastatur (7) eingegeben und an den Empfänger übertragen wird bzw. eine Auswertung gesprochener Daten und/oder eine Analyse der sprecherspezifischen Kennwerte vorgenommen wird.

10. Verfahren nach Anspruch 1, **dadurch gekennzeichnet, daß** das Mobiltelefon (5, 16) mittels der Sende- und Empfangseinrichtung für Mobilfunk-Signale als Fernbedienung betrieben wird, wobei es in einen Betriebszustand geschaltet wird, bei dem die Leistung der Sende- und Empfangseinrichtung derart herabgesetzt wird, daß keine Verbindung zu einem Mobilfunknetz hergestellt wird.

11. Verfahren nach Anspruch 1, **dadurch gekennzeichnet, daß** das Mobiltelefon (5, 16) mittels der Sende- und Empfangseinrichtung für Mobilfunk-Signale als Fernbedienung betrieben wird, wobei es in einen Betriebszustand geschaltet wird, bei dem eine vom Mobilfunknetzbetreiber bereitgestellte kostenfreie Datenübertragung vorgenommen wird.

12. Verfahren nach Anspruch 1, **dadurch gekennzeichnet, daß** das Mobiltelefon (5, 16) mittels der Sende- und Empfangseinrichtung für Mobilfunk-Signale als Fernbedienung betrieben wird und in einen fernbedienungsspezifischen Betriebszustand gebracht wird, in dem lediglich Signale für Fernbedienungszwecke gesendet bzw. empfangen werden und keine Verbindung zu einem Mobilfunknetz aufgenommen wird.

13. Verfahren nach Anspruch 12, **dadurch gekennzeichnet, daß** das Mobiltelefon (5, 16) durch Frequenzwechsel in den fernbedienungsspezifischen Betriebszustand gebracht wird, wobei auf eine von der für den Mobilfunk benutzten Frequenz verschiedene Frequenz gewechselt wird, mit der keine Verbindung zu-einem Mobilfunknetz aufgenommen wird.

14. Verfahren nach einem der vorhergehenden Ansprüche, **dadurch gekennzeichnet, daß** das Mobiltelefon (5, 16) als Umsetzer betrieben wird, wobei vom Teilnehmer eine Leitzentrale (11) angerufen wird, die ein spezifisches Signal aussendet, welches vom Mobiltelefon (5, 16) in ein vom für die Fernbedienung benutzten Sender an den Empfänger des fernbedienbaren Objekts (1, 2) auszusendendes Fernsteuerungssignal umgesetzt wird.

15. Verfahren nach Anspruch 14, **dadurch gekennzeichnet, daß** von der Leitzentrale (11) das spezifische Signal nur nach Empfang und Prüfung einer Berechtigung, insbesondere eines teilnehmerspezifischen Codes, ausgesendet wird.

16. Verfahren nach Anspruch 14 oder 15, **dadurch gekennzeichnet, daß** das von der Leitzentrale (11) ausgesandte spezifische Signal nur zusammen mit dem auf der Mobilfunknetzkarte gespeicherten Teilnehmercode in ein Fernsteuerungssignal umgesetzt wird.

17. Verfahren nach einem der vorhergehenden Ansprüche, daß nach der Übertragung der Daten vom Mobiltelefon (5, 16) mittels eines Empfängers Bestätigungsmeldungen des fernbedienbaren Objekts (1, 2) empfangen werden.

18. Verfahren nach Anspruch 17, **dadurch gekennzeichnet, daß** die Bestätigungsmeldungen von einem zusätzlichen, im Mobiltelefon (5, 16) vorgesehenen fernbadienungsspezifischen Empfänger (6) empfangen werden.

19. Verfahren nach Anspruch 17, **dadurch gekennzeichnet, daß** die Bestätigungsmeldungen vom Empfänger der Sende- und Empfangseinrichtung für Mobilfunk-Daten empfangen werden.

20. Verfahren nach einem der vorhergehenden Ansprüche, **dadurch gekennzeichnet, daß** Meldungen auf dem Display (9) des Mobiltelefons (5, 16) angezeigt werden.

21. Mobiltelefon (5, 16), das eine Mobilfunknetzkarte, eine Sende- und Empfangseinrichtung für Mobilfunk-Signale, eine Tastatur (7) und ein Display (9) aufweist,
wobei das Mobiltelefon (5, 16) als Fernsteuerung betreibbar ist, wobei mittels eines zusätzlichen fernbedienungsspezifischen Senders (6) Daten an einen Empfänger (3, 4) eines fernbedienbaren Objekts (1, 2) übertragbar sind und das Mobiltelefon (5, 16) in einen fernbedienungsspezifischen Betriebszustand schaltbar ist, in welchem keine Verbindung zu einer Station des Mobilfunknetzes hergestellt wird,
**dadurch gekennzeichnet, dass** der Sender (6) ausgebildet ist, als Daten neben einem Funktionscode für die über die Fernbedienung auszuführende Funktion die Teilnehmerdaten der Mobilfunknetzkarte an den Empfänger (3, 4) zu übertragen.

22. Mobiltelefon nach Anspruch 21, **dadurch gekennzeichnet, daß** der Sender eine zusätzliches Sender- oder Sender-/Empfängerelement (6), insbesondere zur drahtlosen Signalübertragung ist.

23. Mobiltelefon nach Anspruch 22, **dadurch gekennzeichnet, daß** das Sender- oder Sender-/Empfängerelement als externes aufsteckbares Modul (17) ausgestaltet ist.

24. Mobiltelefon nach Anspruch 23, **dadurch gekennzeichnet, daß** das externe aufsteckbare Modul ein mit dem Sender- oder Sender-/Empfängerelement versehener Akku (17) ist.

25. Mobiltelefon nach Anspruch 23 oder 24, **dadurch gekennzeichnet, daß** das externe aufsteckbare Modul ohne zusätzliche Verbindungselemente direkt an das Mobiltelefon (16) anschließbar ist.

26. Mobiltelefon nach einem der Ansprüche 22 bis 25, **dadurch gekennzeichnet, daß** die Signalübertragung auf Frequenzen im LF-Bereich, im HF-Bereich, im UHF-Bereich, im Ultraschallbereich oder im Infrarotbereich erfolgt.

27. Mobiltelefon nach Anspruch 21, **dadurch gekennzeichnet, daß** der für den Mobilfunk vorgesehene Sender der Sende- und Empfangseinrichtung gleichzeitig als Sender für die Fernsteuerung dient und der Betriebszustand, in welchem keine Verbindung zu einem Mobilfunknetz herstellbar ist, durch eine Leistungsabsenkung der Sende- und Empfangseinrichtung realisiert ist.

28. Mobiltelefon nach Anspruch 21, **dadurch gekennzeichnet, daß** der für den Mobilfunk vorgesehene Sender der Sende- und Empfangseinrichtung gleichzeitig als Sender für die Fernsteuerung dient und der Betriebszustand, in welchem keine Verbindung zu einem Mobilfunknetz herstellbar ist, durch eine fernbedienungsspezifische Frequenz realisiert ist.

29. Fernsteuerungssystem, bestehend aus einer Fernsteuerung mit einem Sender und mindestens einem fernsteuerbaren Objekt (1, 2) mit einem von der Fernsteuerung ansteuerbaren Empfänger, **dadurch gekennzeichnet, daß** es mit einem Verfahren gemäß einem der Ansprüche 1 bis 20 betreibbar ist und/oder die Fernsteuerung ein Mobiltelefon (5, 16) nach einem der Ansprüche 21 bis 28 ist.

30. Fernsteuerungssystem nach Anspruch 29, **dadurch gekennzeichnet, daß** das mindestens eine fernsteuerbare Objekt (1, 2) einen Sender und das Mobiltelefon (5, 16) einen dazu passenden Empfänger aufweist.

31. Fernsteuerungssystem nach einem der Ansprüche 29 oder 30, **dadurch gekennzeichnet, daß** das fernsteuerbare Objekt ein Schließsystem in Türen und/oder Toren, insbesondere in Haustüren und/oder Garagentoren (1), und/oder eine Funktion eines Kraftfahrzeugs (2), insbesondere die Zentralverriegelung und/oder Wegfahrsperre ist.

32. Fernsteuerungssystem nach einem der Ansprüche 29 bis 31, **dadurch gekennzeichnet; daß** Fernbedienungsfunktionen und/oder Berechtigungen von sprecherspezifischen Merkmalen und/oder des Teilnehmercodes der SIM-Netzkarte abhängen.

## Claims

1. Method for the operation of a mobile telephone (5, 16) for a mobile radio network, wherein the mobile telephone (5, 16) comprises a mobile radio network card, a transmission and reception device for mobile radio signals, a keypad (7) and a display (9),
wherein the mobile telephone (5, 16) is operated as a remote control by means of an additional remote-control-specific transmitter (6), and wherein the transmitter (6) is used to transmit data to a receiver (3, 4) in a remotely-controlable object (1, 2) and the mobile telephone (5, 16) is switched to a remote-control-specific operating state in which no connection is set up to a station of the mobile radio network,
**characterized in that** in the remote-control-specific operating state, the subscriber data from the mobile radio network card are transmitted to the receiver (3, 4) as data in addition to a function code for the function which is to be performed by means of the remote control.

2. Method according to Claim 1, **characterized in that** the mobile telephone (5, 16) is switched to an operating state in which the transmission and reception device for mobile radio signals is shut down.

3. Method according to Claim 1 or 2, **characterized in that** the additional remote-control-specific transmitter used is an LF, HF, UHF, ultrasound or IR transmitter.

4. Method according to one of Claims 1 to 3, **characterized in that** the additional remote-control-specific transmitter is connected to the mobile telephone (5, 16) as an external module and is connected to it by means of a data interface in the mobile telephone (5, 16).

5. Method according to Claim 4, **characterized in that** the additional remote-control-specific transmitter is accommodated in the storage battery of the mobile telephone (5, 16).

6. Method according to one of Claims 1 to 5, **characterized in that** a transmission protocol is used in association with a data transmission for the remote control.

7. Method according to one of Claims 1 to 6, **characterized in that** a subscriber code stored on the mobile radio network card is transmitted as authorization for the triggering of a remote control function.

8. Method according to one of Claims 1 and 7, **characterized in that** the subscriber data and/or the subscriber code is/are linked to the function code such that the remote control function can be triggered only in association with the mobile radio network card.

9. Method according to one of the preceding claims, **characterized in that** the transmission of the data is preceded by the performance of identification which meets the individual requirements, particularly by the input of a subscriber-specific code using the keypad (7) and the transmission of said code to the receiver or by the performance of evaluation of spoken data and/or analysis of the speaker-specific parameters.

10. Method according to Claim 1, **characterized in that** the mobile telephone (5, 16) is operated as a remote control by means of the transmission and reception device for mobile radio signals, wherein said mobile telephone is switched to an operating state in which the power of the transmission and reception device is reduced such that no connections are set up to a mobile radio network.

11. Method according to Claim 1, **characterized in that** the mobile telephone (5, 16) is operated as a remote control by means of the transmission and reception device for mobile radio signals, wherein said mobile telephone is switched to an operating state in which cost-free data transmission provided by the mobile radio network operator is performed.

12. Method according to Claim 1, **characterized in that** the mobile telephone (5, 16) is operated as a remote control by means of the transmission and reception device for mobile radio signals and is put into a remote-control-specific operating state in which only signals for remote control purposes are sent and received and no connections to a mobile radio network are accepted.

13. Method according to Claim 12, **characterized in that** the mobile telephone (5, 16) is put into the remote-control-specific operating state by changing frequency, wherein the frequency is changed to a frequency which is different from the frequency used for the mobile radio and at which no connections to a mobile radio network are accepted.

14. Method according to one of the preceding claims, **characterized in that** the mobile telephone (5, 16) is operated as a converter, wherein the subscriber calls a communication controller (11) which transmits a specific signal which is converted by the mobile telephone (5, 16) into a remote control signal to be transmitted from the transmitter used for the remote control to the receiver in the remote-controlled object (1, 2).

15. Method according to Claim 14, **characterized in that** the communication controller (11) transmits the specific signal only after an authorization, particularly a subscriber-specific code, has been received and checked.

16. Method according to Claim 14 or 15, **characterized in that** the specific signal transmitted by the communication controller (11) is converted into a remote control signal only together with the subscriber code stored on the mobile radio network card.

17. Method according to one of the preceding claims, **characterized in that** the transmission of the data from the mobile telephone (5, 16) is followed by the use of a receiver to receive acknowledgement messages from the remote-controlled object (1, 2).

18. Method according to Claim 17, **characterized in that** the acknowledgement messages are received by an additional remote-control-specific receiver (6) provided in the mobile telephone (5, 16).

19. Method according to Claim 17, **characterized in that** the acknowledgement messages are received by the receiver in the transmission and reception device for mobile radio data.

20. Method according to one of the preceding claims, **characterized in that** messages are displayed on the display (9) of the mobile telephone (5, 16).

21. Mobile telephone (5, 16) which has a mobile radio network card, a transmission and reception device for mobile radio signals, a keypad (7) and a display (9),
wherein the mobile telephone (5, 16) can be operated as a remote control, wherein an additional remote-control-specific transmitter (6) can be used to transmit data to a receiver (3, 4) in a remotely-controlable object (1, 2) and to switch the mobile telephone (5, 16) to a remote-control-specific operating state in which no connections are set up to a station of the mobile radio network,
**characterized in that** the transmitter (6) is arranged to transmit the subscriber data from the mobile radio network card to the receiver (3, 4) as data in addition to a function code for the function which is to be performed by means of the remote control.

22. Mobile telephone according to Claim 21, **characterized in that** the transmitter is an additional transmitter or transceiver element (6), preferably for wireless signal transmission.

23. Mobile telephone according to Claim 22, **characterized in that** the transmitter or transceiver element is in the form of an external pluggable module (17) .

24. Mobile telephone according to Claim 23, **characterized in that** the external pluggable module is a storage battery (17) provided with the transmitter or transceiver element.

25. Mobile telephone according to Claim 23 or 24, **characterized in that** the external pluggable module can be connected to the mobile telephone (16) directly without additional connecting elements.

26. Mobile telephone according to one of Claims 22 to 25, **characterized in that** the signal transmission is effected at frequencies in the LF range, in the HF range, in the UHF range, in the ultrasound range or in the infrared range.

27. Mobile telephone according to Claim 21, **characterized in that** the transmitter provided for the mobile radio in the transmission and reception device is simultaneously used as a transmitter for the remote control, and the operating state in which no connections can be set up to a mobile radio network is produced by lowering the power of the transmission and reception device.

28. Mobile telephone according to Claim 21, **characterized in that** the transmitter provided for the mobile radio in the transmission and reception device is simultaneously used as a transmitter for the remote control, and the operating state in which no connections can be set up to a mobile radio network is produced by a remote-control-specific frequency.

29. Remote control system, comprising a remote control with a transmitter and at least one remote-controlled object (1, 2) with a receiver which can be actuated by the remote control, **characterized in that** it can be operated using a method according to one of Claims 1 to 20 and/or the remote control is a mobile telephone (5, 16) according to one of Claims 21 to 28.

30. Remote control system according to Claim 29, **characterized in that** the at least one remote-controlled object (1, 2) has a transmitter, and the mobile telephone (5, 16) has a matching receiver.

31. Remote control system according to one of Claims 29 and 30, **characterized in that** the remotely-controlable object is a closing system in doors and/or gates, preferably in front doors and/or garage doors (1), and/or a function of a motor vehicle (2), preferably the central locking system and/or engine immobilizer.

32. Remote control system according to one of Claims 29 to 31, **characterized in that** remote control functions and/or authorizations are dependent on speaker-specific features and/or the subscriber code on the SIM network card.

## Revendications

1. Procédé d'exploitation d'un téléphone mobile (5, 16) pour un réseau de radiocommunication mobile, le téléphone mobile (5, 16) présentant une carte de réseau de radiocommunication mobile, un dispositif d'émission et de réception de signaux de radiocommunication mobile, un clavier (7) et un afficheur (9), le téléphone mobile (5, 16) étant utilisé en tant que commande à distance au moyen d'un émetteur (6) supplémentaire spécifique à une commande à distance, des données étant transmises au moyen de l'émetteur (6) à un récepteur (3, 4) d'un objet commandable à distance (1, 2) et le téléphone mobile (5, 16) étant commuté dans un mode de fonctionnement spécifique à la commande à distance dans lequel aucune liaison n'est établie avec une station du réseau de radiocommunication mobile, **caractérisé en ce que** dans le mode de fonctionnement spécifique à la commande à distance, les données transmises au récepteur (3, 4) en plus d'un code de fonction pour la fonction à exécuter par le biais de la commande à distance sont les données d'abonné de la carte de réseau de radiocommunication mobile.

2. Procédé selon la revendication 1, **caractérisé en ce que** le téléphone mobile (5, 16) est commuté dans un mode de fonctionnement dans lequel le dispositif d'émission et de réception de signaux de radiocommunication mobile est mis hors service.

3. Procédé selon la revendication 1 ou 2,
**caractérisé en ce que** l'émetteur supplémentaire spécifique à une commande à distance utilisé est un émetteur à BF, à HF, à UHF, à ultrasons ou à IR.

4. Procédé selon l'une des revendications 1 à 3, **caractérisé en ce que** l'émetteur supplémentaire spécifique à une commande à distance est raccordé au téléphone mobile (5, 16) en tant que module externe et il est relié avec celui-ci par le biais d'une interface de données du téléphone mobile (5, 16).

5. Procédé selon la revendication 4, **caractérisé en ce que** l'émetteur supplémentaire spécifique à une commande à distance est logé dans l'accumulateur du téléphone mobile (5, 16).

6. Procédé selon l'une des revendications 1 à 5, **caractérisé en ce qu'**un protocole d'émission est utilisé en combinaison avec une transmission de données pour la commande à distance.

7. Procédé selon l'une des revendications 1 à 6, **caractérisé en ce qu'**un code d'abonné enregistré sur la carte de réseau de radiocommunication mobile est transmis en tant qu'autorisation pour le déclenchement d'une fonction de commande à distance.

8. Procédé selon l'une des revendications 1 ou 7, **caractérisé en ce que** les données d'abonné et/ou le code d'abonné sont combinés avec le code de fonction de telle sorte que la fonction de commande à distance ne peut être déclenchée qu'en liaison avec la carte de réseau de radiocommunication mobile.

9. Procédé selon l'une des revendications précédentes, **caractérisé en ce qu'**une identification correspondant aux exigences personnelles est effectuée avant la transmission des données, notamment la saisie d'un code spécifique à l'abonné par le biais du clavier (7) et sa transmission au récepteur ou encore une interprétation des données parlées et/ou une analyse des valeurs caractéristiques spécifiques au locuteur.

10. Procédé selon la revendication 1, **caractérisé en ce que** le téléphone mobile (5, 16) est utilisé en tant que commande à distance au moyen du dispositif d'émission et de réception de signaux de radiocommunication mobile et il est commuté dans un mode de fonctionnement dans lequel la puissance du dispositif d'émission et de réception est réduite de telle sorte qu'aucune liaison n'est établie avec un réseau de radiocommunication mobile.

11. Procédé selon la revendication 1, **caractérisé en ce que** le téléphone mobile (5, 16) est utilisé en tant que commande à distance au moyen du dispositif d'émission et de réception de signaux de radiocommunication mobile et il est commuté dans un mode de fonctionnement dans lequel est effectuée une transmission de données gratuite mise à disposition par l'opérateur du réseau de radiocommunication mobile.

12. Procédé selon la revendication 1, **caractérisé en ce que** le téléphone mobile (5, 16) est utilisé en tant que commande à distance au moyen du dispositif d'émission et de réception de signaux de radiocommunication mobile et il est commuté dans un mode de fonctionnement spécifique à une commande à distance dans lequel ne sont émis ou reçus que des signaux destinés à la commande à distance et aucune liaison avec un réseau de radiocommunication mobile n'est établie.

13. Procédé selon la revendication 12, **caractérisé en ce que** le téléphone mobile (5, 16) est amené dans le mode de fonctionnement spécifique à une commande à distance par un changement de fréquence, une commutation ayant lieu sur une fréquence différente de la fréquence utilisée pour la radiocommunication mobile et avec laquelle aucune liaison avec un réseau de radiocommunication mobile n'est établie.

14. Procédé selon l'une des revendications précédentes, **caractérisé en ce que** le téléphone mobile (5, 16) est utilisé comme transpondeur, une centrale de commande (11) étant appelée par l'abonné, laquelle émet un signal spécifique qui est converti par le téléphone mobile (5, 16) en un signal de commande à distance à émettre au récepteur de l'objet commandable à distance (1, 2) par l'émetteur utilisé pour la commande à distance.

15. Procédé selon la revendication 14, **caractérisé en ce que** le signal spécifique n'est émis par la centrale de commande (11) qu'après avoir reçu et contrôlé une autorisation, notamment un code spécifique à l'abonné.

16. Procédé selon la revendication 14 ou 15, **caractérisé en ce que** le signal spécifique émis par la centrale de commande (11) n'est converti en un signal de commande à distance que conjointement avec le code d'abonné enregistré sur la carte de réseau de radiocommunication mobile.

17. Procédé selon l'une des revendications précédentes, **caractérisé en ce qu'**après la transmission des données du téléphone mobile (5, 16), des messages d'accusé de réception de l'objet commandable à distance (1, 2) sont reçus au moyen d'un récepteur.

18. Procédé selon la revendication 17, **caractérisé en ce que** les messages d'accusé de réception sont reçus par un récepteur spécifique à la commande à distance (6) supplémentaire prévu dans le téléphone mobile (5, 16).

19. Procédé selon la revendication 17, **caractérisé en ce que** les messages d'accusé de réception sont reçus par le récepteur du dispositif d'émission et de réception pour les données de radiocommunication mobile.

20. Procédé selon l'une des revendications précédentes, **caractérisé en ce que** les messages sont affichés sur l'afficheur (9) du téléphone mobile (5, 16).

21. Téléphone mobile (5, 16) qui présente une carte de réseau de radiocommunication mobile, un dispositif d'émission et de réception pour des signaux de radiocommunication mobile, un clavier (7) et un afficheur (9), le téléphone mobile (5, 16) pouvant être utilisé en tant que commande à distance, des données pouvant être transmises à un récepteur (3, 4) d'un objet commandable à distance (1, 2) au moyen d'un émetteur (6) supplémentaire spécifique à une commande à distance et le téléphone mobile (5, 16) pouvant être commuté dans un mode de fonctionnement spécifique à la commande à distance dans lequel aucune liaison n'est établie avec une station du réseau de radiocommunication mobile, **caractérisé en ce que** l'émetteur (6) est conçu pour transmettre au récepteur (3, 4), en plus d' un code de fonction pour la fonction à exécuter par le biais de la commande à distance, des données d'abonné de la carte de réseau de radiocommunication mobile.

22. Téléphone mobile selon la revendication 21, **caractérisé en ce que** l'émetteur est un élément émetteur ou émetteur/récepteur (6) supplémentaire, notamment pour la transmission sans fil de signaux.

23. Téléphone mobile selon la revendication 22, **caractérisé en ce que** l'élément émetteur ou émetteur/récepteur est configuré sous la forme d'un module enfichable (17) externe.

24. Téléphone mobile selon la revendication 23, **caractérisé en ce que** le module enfichable externe est un accumulateur (17) muni de l'élément émetteur ou émetteur/récepteur.

25. Téléphone mobile selon la revendication 23 ou 24, **caractérisé en ce que** le module enfichable externe peut être raccordé directement au téléphone mobile (16) sans éléments de liaison supplémentaires.

26. Téléphone mobile selon l'une des revendications 22 à 25, **caractérisé en ce que** la transmission de signaux s'effectue à des fréquences dans la plage des BF, dans la plage des HF, dans la plage des UHF, dans la plage des ultrasons ou dans la plage des infrarouges.

27. Téléphone mobile selon la revendication 21, **caractérisé en ce que** l'émetteur du dispositif d'émission et de réception prévu pour la radiocommunication mobile sert en même temps d'émetteur pour la commande à distance et l'état de fonctionnement dans lequel aucune liaison ne peut être établie avec le réseau de radiocommunication mobile est réalisé par une diminution de la puissance du dispositif d'émission et de réception.

28. Téléphone mobile selon la revendication 21, **caractérisé en ce que** l'émetteur du dispositif d'émission et de réception prévu pour la radiocommunication mobile sert en même temps d'émetteur pour la commande à distance et l'état de fonctionnement dans lequel aucune liaison ne peut être établie avec le réseau de radiocommunication mobile est réalisé par une fréquence spécifique à la commande à distance.

29. Système de commande à distance, composé d'une commande à distance comprenant un émetteur et au moins un objet commandable à distance (1, 2) muni d'un récepteur pouvant être commandé par la commande à distance, **caractérisé en ce qu'**il peut fonctionner avec un procédé selon l'une des revendications 1 à 20 et/ou la commande à distance est un téléphone mobile (5, 16) selon l'une des revendications 21 à 28.

30. Système de commande à distance selon la revendication 29, **caractérisé en ce que** l'au moins un objet commandable à distance (1, 2) présente un émetteur et le téléphone mobile (5, 16) un récepteur adapté à celui-ci.

31. Système de commande à distance selon l'une des revendications 29 ou 30, **caractérisé en ce que** l'objet commandable à distance est un système de fermeture dans des portes et/ou des portails, notamment dans des portes de maison et/ou des portails de garage (1) et/ou une fonction d'un véhicule automobile (2), notamment le verrouillage centralisé et/ou le dispositif antidémarrage.

32. Système de commande à distance selon l'une des revendications 29 à 31, **caractérisé en ce que** les fonctions de commande à distance et/ou les autorisations dépendent de caractéristiques spécifiques au locuteur et/ou du code d'abonné de la carte de réseau SIM.
